# EUROPÄISCHE PATENTANMELDUNG

(11) **EP 0 634 110 A2**
(43) Veröffentlichungstag der Anmeldung: **18.01.1995**
(21) Anmeldenummer: 94110677.5
(22) Anmeldetag: 08.07.1994
(51) Int. Cl.: A23L 2/52, A23L 1/302, A23L 1/304

(54) **Flüssige Nahrungsmittel**

(30) Priorität: 08.07.1993 DE 4322793
(71) Anmelder: Eckes Aktiengesellschaft, D-55268 Nieder-Olm (DE)
(72) Erfinder: Wiesenberger, Alfred, D-65191 Wiesbaden (DE); Kolb, Ehrich, Dr., D-55268 Nieder-Olm (DE); Simson, Ingrid, D-55122 Mainz (DE)
(74) Vertreter: Werner, Hans-Karsten, Dr.Dipl.-Chem.

(57) **Zusammenfassung**

Die mit Nährstoffen, Vitaminen und Mineralstoffen angereicherten fruchthaltigen flüssigen Nahrungsmittel mit einem Fruchtgehalt von 25 bis 100 Gew.-%, einem Säuregehalt berechnet als Weinsäure von mindestens 5 g/l und einem pH-Wert von höchstens 4,5 enthaltend zusätzlich mindestens 2.000 mg/l gelöstes Calciumphosphat. Vorzugsweise enthaltend sie weitere Mineralstoffe. Sie sind geeignet, Demineralisierungserscheinungen des Zahnschmelzes, die beim Genuß säurehaltiger Getränke beobachtet werden, zu verringern bzw. zu verhindern.

## Beschreibung

Gegenstand der vorliegenden Erfindung sind mit Nährstoffen, Vitaminen und Mineralstoffen angereicherte flüssige Nahrungsmittel mit einem Fruchtgehalt von 25 bis 100 Gew.-%, einem Säuregehalt berechnet als Weinsäure von mindestens 5 g/l und einem pH-Wert von höchstens 4,5.

Durch zahlreiche epidemiologische und ernährungswissenschaftliche Untersuchungen ist sicher belegt, daß ungünstige Ernährungsgewohnheiten viel zum Entstehen und zur Progression jener Krankheiten beitragen, die unter westlichen Lebensbedingungen häufig vorkommen. Obwohl die qualitativen und quantitativen Wirkungen bestimmter Ernährungsformen und Nährstoffe nicht in allen Fällen aufgeklärt sind, besteht kein Zweifel daran, daß überkalorische Ernährung und die Zusammensetzung der täglichen Nahrung im Hinblick auf die Hauptnährstoffe Fett, Protein, Kohlenhydrate, ebenso wie Mineralstoff- und Vitaminversorgung dazu beitragen. Unter Berücksichtigung dieser Ernährungssituation ist daher dem Verhältnis der essentiellen Nährstoffe zum Energiegehalt, d.h. der Nährstoffdichte, besondere Beachtung zu schenken.

Der im Auftrag des Bundesgesundheitsministers für Ernährung, Landwirtschaft und Forsten von der Deutschen Gesellschaft für Ernährung (DGE) herausgegebene "Ernährungsbericht 1992" hebt hervor, daß sich die Ernährungssituation der Bevölkerung in der Bundesrepublik Deutschland seit der Erhebung für den Ernährungsbericht 1988 verbessert hat. Trotz dieser begrüßenswerten Verbesserung stellt der Bericht fest, daß Hauptprobleme für die Gesundheit von der weit verbreiteten Überernährung ausgehen, und daß die Versorgung mit verschiedenen Nährstoffen, u.a. mit Calcium, erhöht werden muß.

Auch neuere englische Ernährungsstudien zeigen, daß schätzungsweise 30 % der von Schulkindern verzehrten Mittagessen zu hohe Fett- und Zuckeranteile und zu wenig Calcium, Vitamin C und Ballaststoffe enthalten (Worsfold et al.: The quality of school-children's packed lunches; British Food Journal, 1992). In den USA durchgeführte Ernährungsgutachten belegen, daß die Calciumversorgung der Bevölkerung unterhalb der US-Empfehlung von täglich 800 mg für Erwachsene und 1.200 mg für Kinder und Jugendliche liegt (Schnepf et al.: The solubility of calcium from antacid tablets, calcium supplements and fortified food products; Nutr. Res., 1991).

Der Ernährungsbericht 1988 weist auch auf den erschreckend schlechten Gesundheitszustand der Zähne in der Bundesrepublik Deutschland hin. Demnach haben etwa 50 % der 3-jährigen Kinder bzw. 90 % der Schulanfänger kariöse Gebisse. Die Milchzähne sind nicht allein zum Kauen notwendig; sie sind auch Platzhalter für die bleibenden Zähne. Sie sollten daher so lange wie möglich erhalten werden, um Stellungsanomalien der bleibenden Zähne zu vermeiden.

Unter Karies ist im engeren Sinn die Zahnfäule (caries dentium) zu verstehen, "... bei der die Hartsubstanz der Zähne (Zahnschmelz, Zahnzement, Dentin) fortschreitend unter Bildung von Löchern zerstört wird" (Römpp Chemielexikon, 9. Auflage, Band 3).

Zahlreiche Veröffentlichungen beschreiben, daß der Genuß herkömmlicher säurehaltiger Getränke, u.a. auch von Fruchtsäften bzw. fruchtsafthaltigen Getränken, zu Erosionen des Zahnschmelzes führt (Grobler et al.: In vitro demineralization of enamel by orange juice, apple juice, Pepsi Cola and Diet Pepsi Cola, Clin. Prev. Dent. 1990; Meurman et al.: Experimental sports drinks with minimal dental erosion effect, Scand. J. Dent. Res. 1990; Grenby et al.: Potential dental effects of infants' drinks studied invitro, Brit. J. Nutr. 1990; Grenby et al.: Laboratory studies of the dental properties of soft drinks, Brit. J. Nutr. 1989; US-A-5,108,761).

Nach der US-Patentschrift US-A-5,108,761 wird eine zahnschonende Wirkung durch Calicum-citrat-malat-Supplementierung beobachtet. Ähnliche Mechanismen werden für andere Calciumsalze beschrieben. Bezüglich der Demineralisierung spielen die in den Getränken enthaltenen freien Säuren, ihr pH-Wert und das Zuckerspektrum eine Rolle, wobei die Bedeutung der verschiedenen in Fruchtsäften und fruchtsafthaltigen Getränken natürlicherweise enthaltenen Säuren offensichtlich noch nicht geklärt ist und durchaus unterschiedlich bewertet wird.

Einige Arbeiten schreiben höheren pH-Werten eine geringere Calciumablösung zu; nach anderen Autoren sollen hingegen niedrige pH-Bereiche von 3,2 bis 3,3 zu verringerten Calcium- und Phosphatablösungen des Zahnschmelzes führen.

Tierexperimentell führten Eisenmangelzustände zu höheren Kariesvorkommen. Dies könnte darin begründet sein, daß Eisenmangel die Biosynthese von Prolin und anderen Speichel-Proteinen hemmt, die eine Schutzfunktion gegenüber kariogenen Einflüssen auf die Zähne ausüben (Sintes et al.: Influence of dietary iron on the dental caries incidence and growth of rats fed an experimental diet. Archivos latinoamericanos de Nutrición, 1983).

Die absoluten Zahlen der Calcium- bzw. besonders der Eisengehalte von Nahrungsmitteln geben kaum Auskunft über die tatsächlich bioverfügbaren, d.h. resorbierbaren Calcium- und Eisenmengen. Vergleichsweise gut resorbiert wird Eisen, das dem Körper in Form des in Fleisch und Fleischprodukten vorkommenden Hämoglobineisens zugeführt wird. Vor einer Steigerung des Fleischverzehrs wird allerdings nach derzeitigen Erfahrungen im Gesundheitswesen abgeraten (Windisch et al.: Beeinflußung der Eisen-Bioverfügbarkeit durch Inhaltsstoffe in Nahrungsmitteln, AID-Verbraucherdienst 1984; Leitzmann et al.: Vollwert-Ernährung, Grundlagen einer vernünftigen Ernährungsweise, Haug-Verlag 1986).

Zur Sicherung der Bedarfsdeckung muß daher versucht werden, die Nicht-Häm-Eisenzufuhr, wie sie beispielsweise in pflanzlichen Produkten vorliegt, zu erhöhen bei gleichzeitiger Steigerung der Resorptionsrate.

Aus der Literatur ist bekannt, daß die Bioverfügbarkeit von Eisen in Gegenwart von Vitamin C, Succinaten, Kohlenhydraten, insbesondere Fructose, Sorbit, Serin und Cystein verbessert werden kann. Das Vorliegen zweiwertigen Eisens soll ebenso für die bessere Verfügbarkeit günstig sein, obwohl andere Autoren diesen Einfluß nicht bestätigen. Hemmend auf die Eisenresorption wirken u.a. Tannine und Calcium.

Es ist bekannt, daß die hemmenden Calcium-Eisen-Interaktionen besonders in Gegenwart von Vitamin C aber auch durch die in Fruchtsäften vorliegenden Fruchtsäuren, insbesondere Citronensäure und Äpfelsäure, vermindert oder sogar vermieden werden können. Diese Tatsache hat man sich auch z.T. durch Zusatz synthetischer Citronensäure und Äpfelsäure in Verbindung mit Calciumsalzen zunutze gemacht.

Von Smith et al. wurden vier verschiedene Calciumquellen (Calciumcarbonat, Calciumphosphat, Knochenmehl, Calciumhydroxylapatit) hinsichtlich ihres Einflusses auf die Eisenabsorption bei Ratten untersucht, wobei das Ca:Fe-Verhältnis in den Testmedien 60:1 und 120:1 betrug. Obwohl alle getesteten Calciumquellen im Vergleich zur Kontrollprobe ohne Calciumzusatz die Eisenabsorption hemmten, bestanden zwischen den einzelnen Calciumquellen deutliche Unterschiede. Bei einem Ca:Fe-Verhältnis von 60:1 führte Calciumcarbonat zu einer Absorptionsrate von nur 68 %, während sie bei den calciumphosphathaltigen Proben 89 % betrug. Beim Ca:Fe-Verhältnis 120:1 wirkten alle Calciumsalze stärker hemmend auf die Eisenaufnahme, wobei lediglich bei den calciumcarbonathaltigen Proben die Raten gleich niedrig waren (Smith: Calcium and Trace Mineral Interactions, Cereal Foods World, Vol. 33, 1988).

Die Verbesserung der Eisenabsorption in Gegenwart von Vitamin C konnte in zahlreichen Studien belegt werden, wobei eine enge Beziehung zwischen aufgenommener Vitamin C-Menge und der Resorptionsrate nachgewiesen wurde (Matzkies et al.: Über die Verbesserung der Absorption von zweiwertigem Eisen durch einen eisenangereicherten Vitamin C-haltigen Fruchtsaft, Ern.-Umschau, 31, 1984; Callender et al.: Iron absorption from bread, Am. J. Clin. Nutr., 10, 1968; Cook et al.: Vitamin C, the common cold and iron absorption, Am. J. Clin. Nutr., 30, 1977). Verbesserungen der Eisen- und Calciumretention aus calcium- und eisenangereicherten Fruchtgetränken können auf die Gegenwart von Citrat-Ionnen und Zucker, insbesondere Fructose, zurückgeführt werden, die natürlicherweise in Fruchtsäften enthalten sind, oder die den Getränken in synthetischer Form zugesetzt werden (Müller et al.: Calcium-citrat-malat: Eine Alternative Calciumquelle, Ern. Umschau 37, 1990; Deehr et al.: Effects of different calcium sources on iron absorption in postmenopausal women, Am. J. Clin. Nutr., 51, 1990; Mehansho et al.: Calcium bioavailability and iron-calcium interaction in orange juice, J. Amer. Col. Nutr. 8, 1989; Fischer et al.: Die Calcium-Alternative: Angereicherte Fruchtgetränke. Zum Einfluß der Fruchtsaftsorte auf die Calciumretention, Ern. Umschau 37, 1990). Bei einer Bioverfügbarkeitsprüfung des Eisens aus vier Eisenpräparaten erzielten ein Vitamin C-haltiges Präparat und ein serinhaltiges Präparat die höchsten Eisenresorptionswerte (Dietzfelbinger et al.: Bioverfügbarkeit oraler Eisenpräparate, Dtsche Med. Wschr., 20, 1979). Weitere Untersuchungen bestätigen eine erhöhte Eisenresorption in Gegenwart von Succinat oder Fructose (Callender et al.: Absorption of therapeutic preparations of iron measured with a whole body counter, Br. Med. J. 4, 1969; Brodan et al.: Influence of fructose on iron absorption from the digestive system of healthy subjects, Nutr. Dieta 9, 1967 und Davis et al.: The role of chelation in the gastrointestinal absorption of iron in man, Gut 8 (1967)).

Nach Untersuchungen über das Erosionsverhalten verschiedener Sportgetränke auf Hydroxylapatit kommen Yamamoto et al. zu dem Schluß, daß negative Korrelationen bestehen zum einen zwischen dem pH-Wert von Getränken und der Menge an Calcium, die in diese freigegeben werden und zum anderen zwischen der Calciumkonzentration der Getränke und wiederum der in diese freigesetzten Calciummengen (Yamamoto et al.: Studies concerning the effect of sport drinks on hydroxyapatite dissolution, Jap. J. Pedodenties 29, 1991). Ähnliche Ergebnisse berichten Grenby et al.: Potential dental effects of infants' fruit drinks studied in vitro, Brit. J. Nutr., 64, 1990. In vitro wurde von Meurman et al. der Effekt von Sportgetränken und von "künstlichen" Getränken auf den Zahnschmelz von Rinderzähnen getestet. Citronensäurehaltige Getränke bewirkten eine stärkere Erosion und höhere Calciumablösung des Apatits als apfelsäurehaltige (Meurman et al.: Experimental sport drinks with minimal dental erosion effect; Scand. J. Dent. Res., 98, 1990). Diese Ergebnisse werden u.a. auch von Grobler und von Hay bestätigt (Grobler et al.: In vitro Demineralization of enamel by orange juice, apple juice, Pepsi Cola and Diet Pepsi Cola, Clin. Prev. Dent., 12, 1990; Hay et al.: The protective effect of calcium and phosphate ions against erosion of dental enamel and dentine, Brit. Dent. J., 112, 1962). In der Literatur wird ebenfalls berichtet, daß durch Colagetränke enthärtete Zahnschmelzoberflächen durch Kauen von Hartkäse wieder gehärtet werden, während alleinige Speichelstimulationen diesen Effekt, der auf die Aufnahme von Calcium- und Phosphationen an der Zahnschmelzoberfläche zurückzuführen sein dürfte, nicht zeigten (Gedalia et al.: Tooth enamel softening with a cola type drink and rehardening with hard cheese or stimulated saliva in situ, J. Oral Rehab., 18, 1991).

US-A-4,405,600 berichtet ebenfalls über die Vermeidung von Zahnschmelzerosionen durch Zufuhr ausreichend hoher Mengen an Calcium- und/oder Phosphationen. Diese positive Wirkung wurde von zahlreichen Autoren berichtet (Beiraghi et al.: Effect of calcium lactate in erosion and S. mutans in rats when added to Coca-Cola, Ped. Dent. 11, 1989; Grenby et al.: Laboratory studies of the dental properties of soft drinks, Brit. J. Nutr., 62, 1989; Hay et al.: The protective effect of calcium and phosphate ions against acid erosion of dental enamel and dentine, Br. Dent. J., 112, 1962).

Fruchtsäfte erfreuen sich wegen ihres Geschmacks und ihres gesundheitlichen Wertes einer wachsenden Beliebtheit. Besonders beliebt sind auch vitaminangereicherte Produkte, die bereits seit mehreren Jahren erhältlich sind. In zunehmenden Maße werden darüber hinaus auch Produkte angeboten, denen Mineralstoffe zugesetzt sind oder die sowohl mit Vitaminen als auch mit Mineralstoffen angereichert sind.

US-A-4,737,367 beschreibt ein Fruchtgetränk bestehend aus 10 bis 60 % vol Citrusfruchtsaft, 20 bis 70 % vol aus Säften tropischer Früchte, dem Vitamine, insbesondere Vitamin B₁, Pantothensäure, Niacin und Folsäure in der Höhe 25 bis 200 % RDA ("recommended daily allowances") per eight-ounce-serving zugesetzt sind.

EP 0 075 114 beschreibt proteinhaltige, mit Vitaminen und Mineralstoffen angereicherte Fruchtgetränke, die 30 bis 90 Gew.-% Fruchtsaft, 2 bis 20 Gew.-% Molkenproteinkonzentrat und ein Mineralstoffgemisch aus 0,028 bis 0,28 Gew.-% Kalium, 0,028 bis 0,28 Gew.-% Natrium, 0,002 bis 0,08 Gew.-% Magnesium, 0,01 bis 0,3 Gew.-% Calcium und 0,006 bis 0,5 Gew.-% Phosphat enthalten.

EP 0 397 232 A1 beschreibt ein mit Vitaminen und Mineralstoffen angereichertes Getränk, das mit 10 bis 300 % RDA (recommended daily allowances) Betacarotin, 10 bis 300 % Vitamin C und 10 bis 300 % Vitamin B₁ sowie 10 bis 100 % Eisen-Zucker-Komplex oder Eisen-gluconat-ascorbat sowie 10 bis 100 % einer Calciumquelle angereichert ist.

EP 0 297 679 A3 beschreibt Mineralstoffzusätze, bestehend aus Calcium-citrat-malat und Eisen-Zucker-Komplex und damit angereicherte Getränke.

EP 0 297 681 A3 beschreibt eine Methode zur Verbesserung der Bioverfügbarkeit bei gemeinsamer Verabreichung von Calcium und Eisen, wobei als bevorzugte Eisenquelle zweiwertiges Eisen in Form von Eisensulfat oder eines Eisen-Zucker-Komplexes mit Citrat, Tartrat, Ascorbat oder eines Gemisches derselben verwendet wird.

GB 2 212 396 beschreibt einen Ernährungszusatz aus Calcium und Eisen, wobei das Eisen in gecoateter Form vorliegt. Während das Eisen im Verdauungstrakt mit Verzögerung freigesetzt wird, erfolgt eine rasche Resorption des Calciums. Dadurch sollen hemmende Wechselbeziehungen bezüglich der Bioverfügbarkeit zwischen beiden Mineralstoffen vermieden werden.

EP 0 297 680 beschreibt Mineralstoffzusätze, die bestimmte Eisen-Zucker-Komplexe enthalten und zur Eisenanreicherung von Getränken geeignet sind.

US-A-3,734,742 beschreibt ein Getränk mit wenigstens 80 % Wasser, einem pH-Wert von 2 bis 3,4, einem Ascorbinsäuregehalt von 0,056 bis 1.120 mg/ml und einem Eisengehalt von 0,008 bis 0,15 mg/ml.

Die europäische Anmeldung 92 109 081.7 beschreibt mit Mineralstoffen und Vitaminen angereicherte Frucht- und Frucht-/Gemüsegetränke, denen zur sensorischen Kaschierung der Mineralstoffzusätze bestimmte Anteile an tropischen Fruchtsäften und/oder Furchtmark beigefügt werden.

Nach der US-A-4,083,955 wird durch die aufeinanderfolgende Applikation zweier Kompositionen von denen die eine gut lösliche Calcium- und/oder Indiumsalze und die andere gut lösliche Phosphate- und/oder Fluorid enthält, eine Remineralisation des Zahnschmelzes bewirkt. Als geeignete Kompositionen werden u.a. Zahncreme/Zahncreme, Zahncreme/Mundwasser oder Getränk/Getränk beschrieben.

US-A-4,080,440 beschreibt ebenfalls die remineralisierende Wirkung eines metastabilen Gemisches mit einem pH-Wert von 2,5 bis 4, das durch Mischen einer Lösung mit leichtlöslichem Calciumsalz und einer Lösung mit leichtlöslichem Phosphat sowie vorzugsweise Fluorid erhalten wird. Nach Diffusion der metastabilen Lösung in die Zahnoberfläche erfolgt eine pH-Wert-Erhöhung mit nachfolgender Präzipitation.

Tricalciumorthophosphat und auch Hydroxylapatit zählen zu den unlöslichen Calciumsalzen (Römpp Chemielexikon, 9. erweiterte und neubearbeitete Auflage, Georg Thieme Verlag Stuttgart, New York, 1992). Im deutschen Gebrauchsmuster G 93 02 294.9, das Getränke mit Zusätzen von Tricalciumorthophosphat in bestimmten Mischungsverhältnissen mt Calciumlactat beschreibt, wird jedoch ausgeführt, daß feinteiliges Tricalciumphosphat bzw. Hydroxylapatit mit einer Korngröße < 4 µm in Getränken mit relativ hohem Fruchgehalt innerhalb von Stunden, spätestens im Laufe von Tagen in Lösung geht.

Zusammenfassend ist festzustellen, daß, obwohl Getränke mit Zusätzen von Mineralstoffen und Vitaminen seit vielen Jahren bekannt sind, dennoch ein Bedarf besteht an Produkten, die über einen angenehmen Geschmack und eine hohe Nährstoffdichte hinaus einen ernährungsphysiologisch relevanten Zusatznutzen aufweisen und geeignet sind, mögliche unerwünschte, mit dem Genuß dieser flüssigen Nahrungsmittel verbundene Effekte auszuschließen.

Die vorliegende Erfindung hat sich daher die Aufgabe gestellt, wohlschmeckende, fruchthaltige flüssige Nahrungsmittel bereitzustellen mit hoher Nährstoffdichte, welche einen wesentlichen Beitrag zur Versorgung mit essentiellen Nährstoffen, Mineralstoffen und Vitaminen leisten und darüber hinaus geeignet sind, die beim Genuß säurehaltiger Getränke häufig beobachteten negative Einflüsse auf die Zahnsubstanz zu verhindern oder zumindest stark herabzusetzen.

Diese Aufgabe kann überraschenderweise gelöst werden dadurch, daß die flüssigen Nahrungsmittel mindestens 2.000 mg/l gelöstes Calciumphosphat enthalten. Vorzugsweise enthalten diese Produkte zusätzlich 10 bis 75 mg/l Eisenionen. Weiterhin sollten sie vorzugsweise zusätzlich 200 bis 800 mg/l Magnesiumionen und 350 bis 2.000 mg/l Kaliumionen enthalten. Das Verhältnis von Äpfelsäure zu Zitronensäure sollte vorzugsweise 90 zu 10 bis 30 zu 70 betragen. Schließlich enthalten die flüssigen Nahrungsmittel vorzugsweise 0,1 bis 1 mg/l Fluoridionen. Ein Verhältnis von Glucose zu Fructose < 1 trägt ebenfalls zu dem gewünschten Ergebnis bei.

Überraschenderweise wurde dabei festgestellt, daß selbst relativ hohe Konzentrationen an mikrofeinem Hydroxylapatit in Gegenwart ausreichend hoher Fruchtgehalte innerhalb von Stunden, spätestens im Laufe von Tagen fast vollständig gelöst werden und in Lösung verbleiben. Es ist somit möglich, die erfindungsgemäßen flüssigen Nahrungsmittel mit dem gewünschten hohen Gehalt an gelöstem Calciumphosphat herzustellen. Es wurde weiterhin festgestellt, daß erfindungsgemäße flüssige Nahrungsmittel keine nachweisbaren Erosionen an Zähnen bewirken, so daß sie in der Lage sind, die gestellte Aufgabe zu lösen.

Der Gehalt an Vitaminen wird so gewählt, daß eine ausgewogene Mischung vorliegt, die den Empfehlungen der wissenschaftlichen und staatlichen Kommissionen für Ernährungs- und Gesundheitsfragen entsprechen.

Bezüglich der Komponenten Calciumphosphat und zugesetzte Mineralstoffe liegen die bevorzugten Bereiche bei 3.200 bis 4.200 mg/l Calciumphosphat, 20 bis 40 mg/l Eisenionen, 410 bis 580 mg/l Magnesiumionen, 1.000 bis 2.000 mg/l Kaliumionen und 0,4 bis 0,6 mg/l Fluoridionen.

Zur Anreicherung mit Magnesium-, Eisen- und Kaliumionen können neben den bekannten Salzen wie z.B. Lactaten, Gluconaten, Phosphaten, Citraten, Malaten, Carbonaten usw. auch aus natürlichen Quellen, z.B. Molke oder Solen gewonnene Mineralstoffkonzentrate eingesetzt werden. Zusätzlich zu den angegebenen Mengen an Tricalciumorthophosphat können dem Getränk auch weitere zugelassene Calciumsalze wie z.B. Calciumhydrogenphosphate, -carbonat, -lactat, -gluconat, -malat usw. zugesetzt werden.

In den nachfolgenden Beispielen sind bevorzugte flüssige Nahrungsmitteln und ihre Herstellung näher beschrieben. Weiterhin beschrieben sind Teste mit diesen Rezepturen bezüglich der Erosionen an Zähnen.

### Beispiel 1

Zur Herstellung von 10 Litern eines mit 10 Vitaminen, Provitamin A, Calcium und Eisen angereicherten fruchthaltigen flüssigen Nahrungsmittels mit einem Fruchtgehalt von 100 % werden benötigt:
825 g Apfelsaftkonzentrat
505 g einer Mischung bestehend aus Orangensaft-, Ananassaft- und Passionsfruchtsaftkonzentrat
40,9 l natürliches Apfelaroma und Orangen-Wasserphase
1.667 g einer Mischung bestehend aus Mango-, Pfirsich-, Aprikosen-, Bananen-, Kiwi- und Nektarinenmark
10 g einer Mischung enthaltend
13,42 % all-rac-alpha-Tocopherylacetat 50 %ig
0,55 % Thiaminmononitrat
0,66 % Riboflavin
7,00 % Niacin
0,77 % Pyridoxinhydrochlorid
0,11 % Folsäure
0,0012 % Cobalamin
37,5 % Ascorbinsäure
4,38 % Calcium-D-pantothenat
0,025 % D-Biotin
24,0 % Betacarotin 10 %ig
35,2 g mikrofeines Tricalciumphosphat (Hydroxylapatit)
7.419 g Wasser
Bei der Herstellung des Produktes wird wie nachfolgend beschrieben verfahren. Die Fruchtsaftkonzentrate und das Fruchtmark werden mit ca. 4.000 g Wasser versetzt und so lange gerührt, bis eine homogene Mischung vorliegt.

Dieser homogenen Mischung wird unter ständigem Rühren das mikrofeine pulverförmige Hydroxylapatit direkt zugefügt. Die Vitaminmischung wird in ca. 200 ml Wasser von 40°C unter Rühren homogen dispergiert und der vorgenannten Mischung zugesetzt. Nach Zugabe der natürlichen Aromen und der noch fehlenden Wassermenge wird ca. 10 Minuten lang gerührt. Während der Saftbereitung muß darauf geachtet werden, daß der Lufteinschlag so gering wie möglich ist. Da trotz vorsichtiger Arbeitsweise ein, wenn auch geringer, Lufteinschlag jedoch unvermeidlich ist, muß das Produkt vor der Pasteurisation mittels eines Vakuumentlüfters entgast werden. Nach der Kurzzeiterhitzung (40 sec, 88°C) in einem Plattenwärmeaustauscher wird das Produkt in 0,2 l Flaschen abgefüllt und in einem Tunnelkühler auf Raumtemperatur zurückgekühlt. Durchlaufgeschwindigkeit und Wassertemperatur im Rückkühler sind so einzustellen, daß eine Heißhaltezeit in der Flasche von 8 Minuten über 70°C eingehalten wird.

Das nach diesen Bedingungen hergestellte flüssige Nahrungsmittel hat die folgende Zusammensetzung:

| | |
|---|---|
| Gesamtextrakt: | 12,9 ° Brix |
| Gesamtsäure: (ber. als Weinsäure) | 0,61 mg / 100 ml |
| Äpfelsäure: | 0,43 g / 100 ml |
| Citronensäure: | 0,22 g/l |
| Äpfelsäure/Citronensäure-Verhältnis: | 1,95 |
| pH-Wert (20°C): | 4,0 |
| Glucose: | 2,3 g / 100 ml |
| Fructose: | 4,4 g / 100 ml |
| Saccharose: | 3,5 g / 100 ml |
| Glucose/Fructose-Verhältnis: | 0,52 |
| Energiewert: | 182 kJ (43 kcal) / 100 ml |

| **Vitamingehalt** | |
|---|---|
| - Vitamin E: | 4,5 mg / 100 ml |
| - Vitamin B₁: | 0,5 mg / 100 ml |
| - Vitamin B₂: | 0,6 mg / 100 ml |
| - Niacin: | 7,0 mg / 100 ml |
| - Vitamin B₆: | 0,7 mg / 100 ml |
| - Folsäure: | 0,1 mg / 100 ml |
| - Vitamin B₁₂: | 1,0 mcg / 100 ml |
| - Vitamin C: | 37,5 mg / 100 ml |
| - Pantothenat: | 4,0 mg / 100 ml |
| - Biotin: | 25 mcg / 100 ml |
| - Provitamin A (Retinoläquivalent): | 0,4 mg / 100 ml |

| **Mineralstoffgehalt** | |
|---|---|
| - Calcium (gesamt) : | 143 mg / 100 ml |
| - Calcium (gelöst): | 136 mg / 100 ml |
| - Phosphat (gesamt): | 228 mg / 100 ml |
| - Phosphat (gelöst): | 218 mg / 100 ml |
| - Gesamtcalcium/Gesamtphosphat-Verhältnis: | 0,627 |
| - Verhältnis gelöstes Calcium/gelöstes Phosphat: | 0,623 |

Zur Ermittlung des Gehalts an gelösten Calcium- und Phosphationen wird das Produkt mittels Ultrazentrifuge zentrifugiert, um die aus den Früchten stammenden Trubbestandteile sowie ungelöst gebliebene Restmengen an Tricalciumphosphat zu entfernen. Die Bestimmungen werden dann im blanken Zentrifugat durchgeführt, alle übrigen Daten werden dagegen direkt im Saft bestimmt.

Der Fruchtgehalt dieses flüssigen Nahrungsmittels beträgt 100 %. Das kann dadurch erreicht werden, daß das Getränk unter Mitverwendung von Fruchtsaftkonzentraten hergestellt wird, bei deren Rekonstituierung eine um die Höhe des Vitamin- und Mineralstoffzusatzes verringerte Wassermenge eingesetzt wird.

### Beispiel 2

Zur Herstellung von 10 Litern eines mit Calcium, Eisen und 5 Vitaminen angereicherten kalorienreduzierten naturtrüben flüssigen Nahrungsmittels mit einem Fruchtgehalt von 60 % werden benötigt:
6.665 g einer Mischung aus naturtrübem Apfelsaft, Orangensaft und Passionsfruchtsaft
0,23 g Natriumsaccharin
2,30 g Natriumcyclamat
1,8 g Vitaminmischung enthaltend
83,5 % Vitamin C
0,8 % Vitamin B₁
1,0 % Vitamin B₂
8,9 % Niacin
1,0 % Vitamin B₆
43,2 g mikrofeines Tricalciumphosphat (Hydroxylapatit)
0,75 g Eisen-(III)-orthophosphat
3.537 g Wasser
Die Herstellung des flüssigen Nahrungsmittels erfolgt wie in Beispiel 1 beschrieben. Das Getränk weist folgende Zusammensetzung auf:

| | |
|---|---|
| Gesamtextrakt: | 8,4 ° Brix |
| Gesamtsäure (ber. als Weinsäure): | 0,8 g / 100 ml |
| Äpfelsäure: | 0,35 g / 100 ml |
| Citronensäure: | 0,44 g / 100 ml |
| Verhältnis Äpfelsäure/Citronensäure: | 0,8 |
| pH-Wert (20°C): | 4,05 |
| Glucose: | 1,7 g / 100 ml |
| Fructose: | 3,3 g / 100 ml |
| Saccharose: | 1,5 g / 100 ml |
| Ratio Glucose/Fructose: | 0,52 |
| Energiewert: | 122 kJ (29 kcal)/100 ml |

| **Vitamingehalt** | |
|---|---|
| - Vitamin C: | 15 mg / 100 ml |
| - Vitamin B₁: | 0,13 mg / 100 ml |
| - Vitamin B₂: | 0,17 mg / 100 ml |
| - Niacin: | 1,6 mg / 100 ml |
| - Vitamin B₆: | 0,18 mg / 100 ml |

| **Mineralstoffgehalt** | |
|---|---|
| - Calcium (gesamt): | 173 mg / 100 ml |
| - Calcium (gelöst): | 165 mg / 100 ml |
| - Eisen: | 2 mg / 100 ml |
| - Phosphat (gesamt): | 268 mg / 100 ml |
| - Phosphat (gelöst): | 256 mg / 100 ml |
| - Gesamtcalcium/Gesamtphosphat-Verhältnis: | 0,65 |
| - Verhältnis gelöstes Calcium/gelöstes Phosphat: | 0,64 |

Die Bestimmung des Gehalts an gelösten Calcium- und Phosphationen wird wie in Beispiel 1 beschrieben durchgeführt.

### Beispiel 3

Zur Herstellung von 10 Litern eines calcium- und magnesiumangereicherten Produktes mit 45 % Fruchtgehalt werden 3.140 g Orangensaft, 1.550 g Aprikosenmark, 720 g Fructose und 1.000 ml Wasser bis zum Vorliegen einer homogenen Mischung unter weitgehendem Luftausschluß gerührt. Dieser homogenen Mischung werden unter ständigem Rühren 31 g mikrofeines Tricalciumphosphat direkt zugesetzt. Im Anschluß werden 22 g zuvor in 500 ml Wasser vorgelöstes Magnesiumlactat zugegeben und nach Zusatz der restlichen Wassermenge von 3.500 ml erneut bis zum Vorliegen einer homogenen Mischung gerührt. Entgasung, Abfüllung, Pasteurisation und Rückkühlung erfolgen wie in Beispiel 1 beschrieben.

Das auf diese Weise hergestellte flüssige Nahrungsmittel hat die folgende Zusammensetzung:

| | |
|---|---|
| Gesamtextrakt: | 12 ° Brix |
| Gesamtsäure (ber. als Weinsäure): | 0,55 g / 100 ml |
| Äpfelsäure: | 0,18 g / 100 ml |
| Citronensäure: | 0,39 g / 100 ml |
| Äpfelsäure/Citronensäure-Verhältnis: | 0,46 |
| pH-Wert (20°C): | 4,15 |
| Glucose: | 1,2 g / 100 ml |
| Fructose: | 8,5 g / 100 ml |
| Saccharose: | 1,5 g / 100 ml |
| Glucose/Fructose-Verhältnis: | 0,14 |
| Calcium (gesamt): | 126 mg / 100 ml |
| Calcium (gelöst): | 120 mg / 100 ml |
| Magnesium | 40 mg / 100 ml |
| Phosphat (gesamt): | 196 mg / 100 ml |
| Phosphat (gelöst): | 187 mg / 100 ml |
| Gesamtcalcium/Gesamtphosphat-Verhältnis: | 0,643 |
| Verhältnis gelöstes Calcium/gelöstes Phosphat: | 0,642 |

### Beispiel 4

Zur Herstellung von 10 Litern eines kalorienreduzierten, mit 6 Vitaminen und Calcium angereicherten Apfel-Fruchtgetränkes werden unter ständigem Rühren 5.125 g Apfelsaft mit 15 g Äpfelsäure sowie 0,15 g Natriumsaccharin und 1,5 g Natriumcyclamat gemischt. Der homogenen Mischung werden anschließend unter ständigem Rühren 20 g mikrofeines Tricalciumphosphat, 1 g einer in 55 ml Wasser vorgelösten Vitaminmischung sowie 5.000 ml fluoridhaltiges Wasser zugesetzt und bis zum erneuten Erreichen einer homogenen Mischung unter sorgfältiger Vermeidung eines Lufteinschlags weitergerührt. Das Wasser enthielt 2 mg/l Fluoridionen. Die weiteren Verfahrensschritte wurden wie in Beispiel 1 beschrieben durchgeführt.

Bei einem Fruchtgehalt von 50 % weist das Produkt folgende Zusammensetzung auf:

| | |
|---|---|
| Gesamtextrakt: | 6 ° Brix |
| Gesamtsäure (ber. als Weinsäure): | 0,5 g / 100 ml |
| Äpfelsäure: | 0,53 g / 100 ml |
| Citronensäure: | < 0,05 g / 100 ml |
| pH-Wert (20°C): | 3,9 |
| Glucose: | 1,2 g / 100 ml |
| Fructose: | 3,3 g / 100 ml |
| Saccharose: | 0,9 g / 100 ml |
| Glucose/Fructose-Verhältnis: | 3,67 |
| Energiewert: | 98 kJ (23 kcal) / 100 ml |

| **Vitamingehalt** | |
|---|---|
| - Vitamin C: | 7,5 mg / 100 ml |
| - Vitamin B₂: | 0,15 mg / 100 ml |
| - Vitamin B₆: | 0,18 mg / 100 ml |
| - Folsäure: | 0,03 mg / 100 ml |
| - Vitamin B₁₂: | 0,3 mcg / 100 ml |

| **Mineralstoffgehalt** | |
|---|---|
| - Calcium (gesamt): | 80 mg / 100 ml |
| - Calcium (gelöst): | 80 mg / 100 ml |
| - Phosphat (gesamt): | 120 mg / 100 ml |
| - Phosphat (gelöst): | 120 mg / 100 ml |
| - Fluorid | 0,1 mg / 100 ml |

Der Effekt auf den Zahnschmelz der in den Beispielen 1 bis 4 beschriebenen Getränke wurde in enger Anlehnung an den von Hay beschriebenen Versuchsaufbau getestet (Hay et al.: The protective effect of calcium and phosphate ions against acid erosion of dental enamel and dentine, Brit. Dent. J., 3, 1962).

### Beispiel 5

Flüssiges Nahrungsmittel gemäß Beispiel 2, wobei zur Herstellung von einem Liter dieses Produktes anstelle des mikrofeinen Hydroxylapatits 8,8 g eines sogenannten "Milchmineralienkonzentrates" verwendet werden. Dieses aus Milch bzw. Süß- oder Sauermolkenkonzentrat gewonnene Produkt enthält pro 100 g ca. 19 g Calcium und 30 g Phosphat. Daneben sind weitere Mineralstoffe wie z.B. Kalium, Natrium, Magnesium, Eisen und Mangan sowie auch Eiweiß enthalten. Das trinkfertige Produkt weist daher zusätzlich einen Gehalt von 2 g/l Eiweiß auf.

### Material and Methoden:

### Zahnmaterial:

Für die in vitro-Tests wurden extrahierte, einwandfreie ganze Schweinezähne verwendet. Für jede Versuchsreihe wurden 3 Sets mit jeweils 6 Zähnen (zwei Schneidezähne, zwei vordere und zwei hintere Backenzähne) zusammengestellt. Dies erfolgte derart, daß in den einzelnen Versuchsreihen die jeweiligen Zähne sich in Größe und Beschaffenheit weitgehend ähnelten. Die Zähne wurden gereinigt und die Zahnwurzeln mit Zement abgedeckt, so daß nur noch der Zahnschmelz frei vorlag. Nach Angaben von Hay bzw. Spiers (Brit. Dent. J., 107, 209 (1959) wurden die ganzen Zähne verwendet, um eine möglichst realistische Situation herzustellen.

### Versuchsablauf zur Untersuchung der Zahnschmelzerosion

Die 6 Zähne eines Sets wurden jeweils einzeln mit der abgedeckten Wurzel nach oben in ein Reagenzglas zu 1 ml der Probelösung gegeben, wobei darauf geachtet wurde, daß die Zahnkronen vollständig mit Lösung bedeckt waren. Die Reagenzgläser wurden in einem Wasserbad auf 37°C temperiert und in kurzen Zeitabständen mittels eines Rüttlers leicht geschüttelt. In drei parallelen Versuchsreihen wurden nach jeweils 2, 4 bzw. 6 Stunden die 6 Lösungen eines Sets in einen 25 ml Meßkolben überführt, die Zähne und Reagenzgläser mit Wasser gespült, das Spülwasser zur Flüssigkeit im Meßkolben gegeben und auf 25 ml aufgefüllt.

Nach Zentrifugation dieser Lösungen wurde im Anschluß der Gehalt an Calcium- und Phosphationen bestimmt und, unter Berücksichtigung des Verdünnungsfaktors, der daraus resultierende Gehalt in mg/100 ml flüssige Nahrungsmittel berechnet.

Nach dem gleichen Versuchsaufbau wurden zur Kontrolle vier weitere Produktmuster getestet, die die gleiche Zusammensetzung aufwiesen wie die in den Beispielen 1 bis 4 beschriebenen und mit 1T, 2T, 3T und 4T bezeichneten flüssigen Nahrungsmittel (T = Test) der vorliegenden Erfindung, denen jedoch im Gegensatz dazu kein Hydroxylapatit zugesetzt wurde. Zum besseren Vergleich wurde der pH-Wert dieser mit 1K, 2K, 3K und 4K bezeichneten Kontrollproben (K = Kontrolle) durch Zusatz von Trikaliumcitrat auf den jeweiligen Wert der flüssigen Nahrungsmittel der vorliegenden Erfindung, d.h. 1K wie 1T auf 4,0, 2K wie 2T auf pH 4,05, 3K wie 3T auf pH 4,15 und 4K wie 4T auf pH 3,9 eingestellt. Die aus den Früchten stammenden und in löslicher Form vorliegenden Calcium- und Phosphatgehalte dieser Kontrollprodukte sind in der nachfolgenden Tabelle aufgeführt, alle übrigen Kennzahlen sind mit den in den Beispielen 1 bis 4 beschriebenen Daten identisch.

| Kontrollprodukt | K1 | K2 | K3 | K4 |
|---|---|---|---|---|
| Calcium mg/100 ml | 7 | 6 | 6 | 4 |
| Phosphat mg/100 ml | 35 | 30 | 26 | 1 |

In den folgenden Abbildungen sind die jeweils nach 2, 4 und 6 Stunden Einwirkungszeit ermittelten Werte den Ausgangswerten der flüssigen Nahrungsmittel der vorliegenden Erfindung gegenübergestellt. Desgleichen sind die Werte für die jeweiligen Kontrollprodukte aufgeführt. Daraus wird ersichtlich, daß unter den beschriebenen Versuchsbedingungen die Calcium- und Phosphatgehalte der Testprodukte T1, T2, T3 und T4 praktisch unverändert blieben, d.h. keine Entmineralisierung festgestellt werden konnte, während die erhöhten Gehalte der Kontrollprodukte K1, K2, K3 und K4 zeigen, daß eine teilweise Ablösung von Calcium- und Phosphationen stattfindet.

Die Ergebnisse sind in den Abbildungen 1 bis 8 dargestellt.

## Patentansprüche

1. Mit Nährstoffen, Vitaminen und Mineralstoffen angereicherte fruchthaltige flüssige Nahrungsmittel mit einem Fruchtgehalt von 25 bis 100 Gew.-%, einem Säuregehalt berechnet als Weinsäure von mindestens 5 g/l und einem pH-Wert von höchstens 4,5, dadurch gekennzeichnet, daß sie mindestens 2.000 mg/l gelöstes Calciumphosphat enthalten.

2. Flüssige Nahrungsmittel gemäß Anspruch 1, dadurch gekennzeichnet, daß sie zusätzlich 10 bis 75 mg/l Eisenionen enthalten.

3. Flüssige Nahrungsmittel gemäß einem der Ansprüche 1 oder 2, dadurch gekennzeichnet, daß sie zusätzlich 200 bis 800 mg/l Magnesiumionen und 350 bis 2.000 mg/l Kaliumionen enthalten.

4. Flüssige Nahrungsmittel gemäß einem der Ansprüche 1 bis 3, dadurch gekennzeichnet, daß sie ein Verhältnis von Äpfelsäure zu Citronensäure von 90 zu 10 bis 30 zu 70 aufweisen.

5. Flüssige Nahrungsmittel gemäß einem der Ansprüche 1 bis 4, dadurch gekennzeichnet, daß sie zusätzlich 0,1 bis 1 mg/l Fluoridionen enthalten.

6. Flüssige Nahrungsmittel gemäß einem der Ansprüche 1 bis 5, dadurch gekennzeichnet, daß sie ein Verhältnis von Glucose zu Fructose kleiner als 1 aufweisen.

7. Flüssige Nahrungsmittel gemäß einem der Ansprüche 1 bis 6, dadurch gekennzeichnet, daß sie zugesetztes Eiweiß enthalten.

8. Flüssige Nahrungsmittel gemäß einem der Ansprüche 1 bis 7, dadurch gekennzeichnet, daß sie CO₂-Gehalte bis 1 g/l enthalten.

9. Flüssige Nahrungsmittel gemäß einem der Ansprüche 1 bis 6, dadurch gekennzeichnet, daß sie 3.200 bis 4.200 mg/l Calciumphosphat, 20 bis 40 mg/l Eisenionen, 410 bis 580 mg/l Magnesiumionen, 1.000 bis 2.000 mg/l Kaliumionen und 0,4 bis 0,6 mg/l Fluoridionen enthalten.

10. Verfahren zur Herstellung von mit Nährstoffen, Vitaminen und Mineralstoffen angereicherten fruchthaltigen flüssigen Nahrungsmitteln mit einem Fruchtgehalt von 25 bis 100 Gew.-%, einem Säuregehalt berechnet als Weinsäure von mindestens 5 g/l und einem pH-Wert von höchstens 4,5 sowie mindestens 2.000 g/l gelöstes Calciumphosphat, dadurch gekennzeichnet, daß das Calciumphosphat als Tricalciumphosphat oder Hydroxylapatit in feinkörniger, mikrokristalliner Form mit einer durchschnittlichen Korngröße von 1 bis 2 µ durch schonendes Rühren in dem Getränk aufgelöst wird.

11. Verfahren gemäß Anspruch 8, dadurch gekennzeichnet, daß die Vitamine und/oder übrigen Mineralstoffe, insbesondere Eisenionen, Magnesiumionen und/oder Kaliumionen erst nach der Auflösung des Calciumphosphats zugemischt werden.

12. Verfahren gemäß Anspruch 8 oder 9, dadurch gekennzeichnet, daß das schonende Rühren mit Hilfe von Leitstrahlmischern erfolgt.
